# EUROPÄISCHE PATENTANMELDUNG

(11) **EP 1 909 479 A1**
(43) Veröffentlichungstag der Anmeldung: **09.04.2008**
(21) Anmeldenummer: 06405425.7
(22) Anmeldetag: 06.10.2006
(51) Int. Cl.: H04N 1/06

(54) **Innentrommelbelichter und Verfahren zur Belichtungssteuerung**

(71) Anmelder: XPOSE Holding AG, 5725 Leutwil (CH)
(72) Erfinder: Berner, Peter, 5102 Rupperswil (CH)
(74) Vertreter: EGLI-EUROPEAN PATENT ATTORNEYS

(57) **Zusammenfassung**

Ein Innentrommelbelichter (1) zum Belichten von Druckvorlagen in der Form von flächigen biegsamen Datenträgern hat einen zumindest teilweise als Innenzylinder (5) geformten Aufnehmer (4) zum Anordnen der Datenträger. Ein um die Zylinderachse Z des Innenzylinders (5) rotierbarer Übertragungskopf (7) mit einer Belichtungsoptik (9) dient zum Belichten der Druckvorlagen, wobei der Aufnehmer (4) und der Übertragungskopf (7) in Richtung der Zylinderachse Z mittels eines Axialantriebs relativ zueinander bewegbar sind. Ausserdem ist ein Array mit einer Vielzahl von Lichtquellen zur Belichtung der Druckvorlagen vorhanden, und die Distanz (d) zwischen zumindest einer Oberfläche des Übertragungskopfes (7) und dem Datenträger während dem Belichten einer Druckvorlage beträgt weniger als 1 cm. Der Übertragungskopf (7) ist an einem um die Zylinderachse Z des Innenzylinders (5) rotierbaren Pendelarm (6) befestigt und es ist ein Radialantrieb (8) zur Erzeugung von Pendelbewegungen für den Pendelarm (6) vorhanden, wobei die Zylinderachse Z als Pendelachse wirkt. Im Vergleich zu rotierenden Systemen können die Belichtungswartezeiten verkürzt werden.

## Beschreibung

Die Erfindung betrifft einen Innentrommelbelichter zum Belichten von Druckvorlagen nach Patentanspruch 1 sowie ein Verfahren zur Belichtungssteuerung nach Patentanspruch 18.

Die Erfindung betrifft insbesondere einen Innentrommelbelichter zum Belichten von Druckvorlagen in der Form von flächigen biegsamen Datenträgern, mit einem zumindest teilweise als Innenzylinder geformten Aufnehmer zum Anordnen der Datenträger und einem um die Zylinderachse des Innenzylinders rotierbaren Übertragungskopf für die Belichtung der Druckvorlagen. Dabei ist der Aufnehmer und der Übertragungskopf in Richtung der Zylinderachse mittels eines Axialantriebs relativ zueinander bewegbar. Weiterhin ist ein Array mit einer Vielzahl von Lichtquellen zur Belichtung der Druckvorlagen vorhanden und die Lichtsignale der Lichtquellen werden von einer Belichtungsoptik im Übertragungskopf gebündelt und für die Belichtung der Datenträger bereitgestellt. Während des Belichtungsvorganges überstreicht der Übertragungskopf mit der Belichtungsoptik den Datenträger in geringem Abstand, vorzugsweise so, dass die Distanz (d) zwischen zumindest einer Oberfläche des Übertragungskopfes und dem Datenträger während dem Belichten einer Druckvorlage weniger als 1 cm beträgt.

Aus der WO-98/52345 ist ein System zum Übertragen von Daten bekannt, das insbesondere zur Belichtung von thermischen Druckplatten Anwendung findet. Es handelt sich dabei um eine Vorrichtung und ein Verfahren zur digitalen Belichtung von Druckplatten. Derartige Verfahren sind als sogenannte CTP (Computer-to-Plate) Verfahren bekannt geworden.

Die Vorrichtung gemäss der WO-98/52345 hat einen zumindest teilweise als Innenzylinder geformten Aufnehmer. Auf diesem Aufnehmer können plattenförmige, d.h. flächige und biegsame Datenträger zwecks Belichtung aufgelegt und fixiert werden. Dabei ist die zur Aufnahme der Daten bzw. die zur Belichtung vorgesehene Seite des Datenträgers der Zylinderachse des Aufnehmers zugewandt. Die Vorrichtung hat ferner einen um die Zylinderachse rotierbaren Übertragungskopf zur optischen Übertragung der Daten auf den Datenträger. Der Aufnehmer und der Übertragungskopf sind zudem in der Richtung der Zylinderachse relativ zueinander bewegbar und die Distanz zwischen zumindest einer Oberfläche des Übertragungskopfes bzw. eines Übertragungsmittels und dem Datenträger beträgt während dem Übertragung der Daten weniger als ¼ des Aufnehmerdurchmessers, in der Regel jedoch weniger als 1 cm. Für die Belichtung wird ein Array mit einer Vielzahl von Lichtquellen eingesetzt, meist Halbleiter-Laserdioden.

Das in der WO-98/52345 gezeigte Innentrommelprinzip, soweit es in der Form realisiert wird, dass der Aufnehmer fix angeordnet ist und der Übertragungskopf axial entlang des Aufnehmers bewegt wird, hat zwar einige Vorteile, die es gegenüber Aussentrommelsystemen attraktiv machen. So können sicher der stets ruhende Datenträger, die fehlende Notwendigkeit zur Befestigung (Festkleben) der Datenträger an einer Trommel sowie der dadurch bedingte Wegfall von Unwuchten, die bei grossen und kleinen Platten natürlich unterschiedlich ausfallen, zu den Vorzügen derartiger Innentrommelbelichtungssysteme gezählt werden. Systeme dieses Typs haben aber auch Nachteile, insbesondere dann, wenn im Verhältnis zur Zylindermantelfläche der Trommel sehr viel kleinere Datenträger belichtet werden müssen. In solchen Fällen ergeben sich relativ lange Belichtungswartezeiten; d.h. für die Belichtung kleiner Datenträger ergeben sich gegenüber grossen Datenträgern kaum Zeiteinsparungen. Ein grundsätzlicher Nachteil kann auch in der Grösse des Trommeldurchmessers liegen, denn durch das Einlegen der flächigen, biegsamen Datenträger auf die Aufnahme können Stauchungen in der Maskenschicht des Datenträgers auftreten, was wiederum die Qualität der hergestellten Masken verschlechtert. Wohl kann durch eine Vergrösserung der Maschine (Vergrösserung des Trommeldurchmessers) diesen Effekten entgegengewirkt werden, es verteuert aber nicht nur die Maschine als Ganzes, sondern es wirkt sich wiederum auch nachteilig auf die Belichtungswartezeiten im Falle der Belichtung kleiner Datenträger aus, was ebenfalls unerwünscht ist. Weitere Nachteile können auch noch darin bestehen, dass es schwierig ist, Absaugungen für ablative Masken zu realisieren, weil diese nämlich über linear und rotativ bewegte Achse erfolgen müssen.

Aufgabe der Erfindung ist es, einen verbesserten Innentrommelbelichter anzugeben mit dem insbesondere die Belichtungswartezeiten reduziert werden können und mit dem eine Vielzahl unterschiedlicher Datenträgermaterialien belichtbar sind. Ebenso soll ein Verfahren angegeben werden, mit dem ein erfindungsgemässer Innentrommelbelichter gesteuert werden kann.

Diese Aufgabe wird durch die Merkmale der Patentansprüche 1 und 18 gelöst.

Bei einem gattungsgemässen Innentrommelbelichter wird dazu der Übertragungskopf an einem um die Zylinderachse des Innenzylinders rotierbaren Pendelarm befestigt und es ist ein Radialantrieb zur Erzeugung von Pendelbewegungen für den Pendelarm vorhanden, wobei die Zylinderachse als Pendelachse wirkt. Das Verfahren zur Steuerung des Innentrommelbelichters beinhaltet die Erzeugung von Pendelbewegungen für den Pendelarm sowie inkrementelle relative Verschiebungen zwischen dem Aufnehmer und dem Übertragungskopf während einer Wartezeit zwischen zwei Pendelbewegungen.

Die Vorteile der Bauweise mit einem Pendelarm bestehen insbesondere darin, dass die Belichtungswartezeiten, die bei kleinen Datenträgern besonders ausgeprägt sind, signifikant reduziert werden (weil hier nicht fast eine ganze Trommelumdrehung abgewartet werden muss, bis eine neue Zeile belichtet werden kann). Mögliche Stauchungen in der Maskenschicht des Datenträgers können auch vermindert werden, indem der Radius des Innenzylinders gross genug gewählt wird, um dies zu verhindern. Letzteres ist bei dieser Konstruktionsweise gut realisierbar, ohne dass die Maschine als Ganzes übermässig gross wird, weil ja nur ein Teil der Zylinderfläche für die Aufnahme von Datenträgern genutzt wird. Durch geeignete Dimensionierung lassen sich somit Spannungen in der Maskenschicht stark vermindern.

Vorteilhaft ist ein erfindungsgemässer Innentrommelbelichter so aufgebaut, dass der Aufnehmer mit einem Axialantrieb in Richtung der Zylinderachse in einer Linearführung axial bewegbar ist. Dies ermöglicht es, die für die Feinheit der optischen Belichtung notwendige mechanische Stabilität des Aufnehmers trotzdem zu erreichen, weil die Bewegung in dieser Richtung vergleichsweise nur sehr langsam und in sehr kleinen Inkrementen (Zeilenabständen) erfolgt.

Vorteilhafterweise ist der Radialantrieb zur Erzeugung von Pendelbewegungen des Pendelarms auch so ausgebildet, dass die Pendelbewegungen mit im wesentlichen konstanter Winkelgeschwindigkeit in dem teilweise als Innenzylinder geformten Aufnehmer erfolgen können. Die Erzielung solcher Bedingungen ist mit Hinblick auf die Vorteile eines gleichmässigen Datenstroms zur Bebilderung bzw. Belichtung des Datenträgers von Vorteil, und sie lässt sich mit den heute zur Verfügung stehenden regelungstechnischen Mitteln und spezieller Motoren, beispielsweise sogenannter Torque-Motoren, auch leicht erzielen.

Die Vorteile der Bauweise gemäss der WO-98/52345 können somit auch hier beibehalten werden, nämlich ein annähernd ruhender Datenträger, die fehlende Notwendigkeit zur Befestigung (Festkleben) der Datenträger an der Trommel sowie der Wegfall etwaiger Unwuchten die bei grossen und kleinen Platten bei rotierenden Trommeln natürlich unterschiedlich ausfallen würden.

Ein weiterer wesentlicher Vorteil kann darin bestehen, dass der Pendelarm mit einer oder mehreren (Beispielsweise zwei) Belichtungsoptiken versehen sein kann. Dies geht natürlich einher mit der Ausstattung der Maschine mit unterschiedlichen Lichtquellen, beispielsweise Laserdioden, die in verschiedenen Wellenlängenbereichen arbeiten. Es besteht nämlich ein Trend, unterschiedlichste Datenträger-Materialien mit der gleichen Maschine bearbeiten bzw. belichten zu können; einerseits Materialien (z.B. Thermoplatten), die im langwelligen (z.B. 830 nm) oder infraroten Bereich belichtbar sind, andererseits Materialien (z.B. Siebdruckschablonen mit einer Fotopolymerschicht), die im kurzwelligen Bereich (z.B. 405 nm) belichtbar sind. Da es nach wie vor keine Belichtungsoptiken gibt, die in allen dieser Wellenlängenbereiche eine gleichermassen gute Abbildungsleistung bieten, kann die Ausstattung mit mehreren, jeweils für verschiedene Wellenlängenbereiche optimierten, Belichtungsoptiken sehr vorteilhaft sein.

Weitere Vorteile eines erfindungsgemässen Innentrommelbelichters können darin bestehen, dass die Aufnahme entweder manuell mit Datenträgern beladbar ist, oder dass eine in Richtung der Zylinderachse axial bewegbare Datenträger-Bestückungseinrichtung vorhanden ist, die im wesentlichen unterhalb der Zylinderachse angeordnet ist. Das in der Detailbeschreibung dargestellte Ausführungsbeispiel zeigt, dass das vorgesehene Maschinenkonzept den Einbau einer Datenträger-Bestückungseinrichtung und gegebenenfalls auch den Einbau einer Stanzeinrichtung in platzsparender Weise erlaubt. Eine Stanzeinrichtung kann in einer Weise eingebaut werden, dass das Stanzen der Datenträger in der gleichen Position wie das Belichten erfolgen kann. Der Aufnehmer kann zudem in einfacher Weise so ausgestaltet sein, dass Datenträger verschiedener Grösse im Aufnehmer positionier-und fixierbar sind. Er kann auch so ausgestaltet sein, dass die Datenträger mittels Unterdrucktechnik und/oder mittels mechanischer Positioniermittel im Aufnehmer fixierbar sind. Wegen des feststehenden Radialantriebs für den Pendelarm kann zudem eine Absaugvorrichtung für ablative Masken bzw. Datenträger in sehr viel einfacherer Weise eingebaut werden als bei der WO-98/52345.

Die Lichtquellen, in der Regel wie bereits erwähnt Laserdioden, sind vorteilhafterweise in einem Array in Modulen in einem Interfaceteil am Innentrommelbelichter angeordnet. Dabei ist das Array als Ganzes oder in Teilen auswechselbar, so beispielsweise für den Ersatz einzelner Laserdioden oder einzelner Module, wobei in einem Modul in der Regel eine kleine Anzahl (beispielsweise 8) Laserdioden zusammengefasst ist.

Das Interfaceteil ist dabei vorteilhafterweise so am Innentrommelbelichter angebracht, dass es die Bewegungen des Übertragungskopfes nicht oder nur in der zur Belichtung der Datenträger erforderlichen Bewegung in axialer Richtung der Zylinderachse mitmacht, um die für einen Belichtungsvorgang zu bewegende Masse des Pendelarms möglichst klein zu halten. In bevorzugter Weise ist das Interfaceteil gemäss dem gezeigten Ausführungsbeispiel ortsfest am Innentrommelbelichter angebracht. Das Interfaceteil könnte aber bei alternativer Bauweise des Gerätes mit feststehendem Aufnehmer und mit in axialer Richtung beweglichem Übertragungskopf auch am axial beweglichen Teil angebracht sein, weil letzterer ja auch hier nur eine vergleichsweise langsame und nur in sehr kleinen Inkrementen (Zeilenabständen) zu verändernde Bewegung erfährt. Da das Interfaceteil neben den Lichtquellen, bevorzugterweise wie erwähnt Laserdioden, auch deren Ansteuerungsschaltungen und insbesondere auch die Kühleinrichtungen für die Lichtquellen trägt, wären diese doch relativ massereichen Komponenten ungeeignet zur Montage auf einem Maschinenteil (hier der Pendelarm) das für schnelle und präzise Bewegungen konzipiert sein muss. Die Bauweise der Maschine erlaubt aber, dass die Zylinderachse bzw. Pendelachse zumindest teilweise als Hohlwelle ausgebildet sein kann und die Lichtsignale von den Lichtquellen über lichtleitende Fasern durch die Hohlwelle zum Übertragungskopf geleitet werden können. Dies hat den zusätzlichen Vorteil, dass die lichtleitenden Fasern während den Pendelbewegungen nur relativ kleinen Torsionsbelastungen ausgesetzt sind. Zudem ist es weiterhin vorteilhaft, die lichtleitenden Fasern beidseitig steckbar zu gestalten, d.h. einerseits am Interfaceteil zur Verbindung mit der jeweilig zugeordneten Laserdiode, anderseits am Pendelarm in einer Steckerbox zur Verbindung mit einer Rasterplatte, die die Lichtsignale der einzelnen lichtleitenden Fasern in einer vordefinierten Rasteranordnung am Eingang der Belichtungsoptik zusammenfasst. Diese Massnahmen erleichtern insbesondere die Systemswartung.

Schliesslich ist die Belichtungsoptik vorzugsweise mit einer Autofokussiereinrichtung ausgestattet um Materialunebenheiten und Systemsungenauigkeiten bei der Belichtung ausgleichen zu können.

Insgesamt ermöglicht das erfindungsgemässe Maschinenkonzept eine sehr kompakte Bauweise, sogar mit Einschluss automatischer oder halbautomatischer Datenträger-Handlingsysteme (Bestücken, Stanzen). Die Tatsache, dass die Belichtungsoptik sehr nahe an der Oberfläche des Datenträgermaterials geführt werden kann, ermöglich eine hohe Gerätepräzision und somit auch die zuverlässige Belichtung sehr feiner Strukturen.

Das erfindungsgemässe Verfahren erlaubt eine effiziente Steuerung des Belichtungsvorganges. Es beinhaltet im wesentlichen, dass pro Pendelbewegung eine ,Zeile' des Datenträgers belichtet wird und dass zwischen den jeweiligen Pendelbewegungen der Übertragungskopf und der Aufnehmer in Axialrichtung relativ zueinander um einen inkrementellen Betrag versetzt werden, um eine weitere ,Zeile' belichten zu können. Vorteilhaft ist dabei die Pendelbewegung des Pendelarmes eine Bewegung mit konstanter Winkelgeschwindigkeit, so dass ein Datenstrom mit zu belichtenden Daten in konstanten und gleichmässigen Zeitintervallen, also mit einer fixen Taktfrequenz, von einer Maschinensteuerung zu dem Übertragungskopf übertragen werden kann. Eine zwingende Notwendigkeit ist dies allerdings nicht, denn es ist durchaus auch möglich, dass die Pendelbewegung des Pendelarmes mit nicht-konstanter Winkelgeschwindigkeit erfolgt und ein Datenstrom mit zu belichtenden Daten in entsprechend nicht-konstanten Zeitintervallen, also mit einer nicht-konstanten Taktfrequenz, von einer Maschinensteuerung zu dem Übertragungskopf übertragen werden kann. Derartige Massnahmen könnten beispielsweise auch ergriffen werden um bekannte systematische Regelungsungenauigkeiten der Regelung für die Pendelbewegung auszugleichen.

Im folgenden wird die Erfindung anhand eines Beispiels näher erläutert. Dabei zeigt die
- Fig. 1: einen erfindungsgemässen Innentrommelbelichter in einer 3D-Ansicht, die
- Fig. 2: den Innentrommelbelichter gemäss Fig. 1 in Grundriss, Aufriss und Seitenriss, und die
- Fig. 3: in schematischer Weise den Bearbeitungsvorgang mit einem Innentrommelbelichter gemäss Fig. 1.

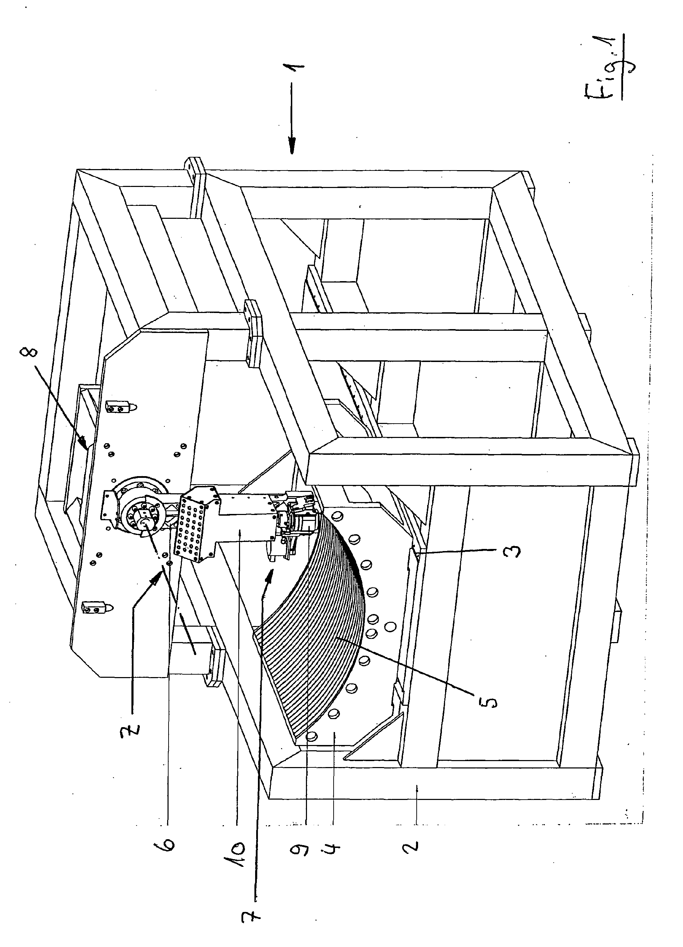

Die Figur 1 zeigt einen erfindungsgemässen Innentrommelbelichter 1 in einer 3D-Ansicht. Auf einem Maschinengestell 2 befindet sich ein auf einer Linearführung 3 angebrachter und mit mittels eines (nicht dargestellten) Axialantriebes bewegbarer Aufnehmer 4. Der Innentrommelbelichter 1 dient zum Belichten von Druckvorlagen in der Form von flächigen biegsamen Datenträgern (nicht dargestellt), die auf dem zumindest teilweise als Innenzylinder 5 geformten Aufnehmer 4 angeordnet (aufgelegt und befestigt) werden. Da die Datenträger als Druckvorlagen zumeist von plattenartiger Form sind, wird der Aufnehmer 4 vielfach auch einfach als Plattenbett bezeichnet. Die Zylinderachse des Innenzylinders 5 ist mit Z bezeichnet. Ebenfalls am Maschinengestell 2 angeordnet ist ein um die Zylinderachse Z des Innenzylinders 5 rotierbarer Pendelarm 6 mit einem Übertragungskopf 7. Ein Radialantrieb 8 dient zur Erzeugung von Pendelbewegungen für den Pendelarm 6, wobei die Zylinderachse Z die Pendelachse ist.

Der Axialantrieb zum Antrieb des Aufnehmers 4 ist vorteilhafterweise mit einem Linearmotor ausgeführt, weil dies zusammen mit der Präzisions-Linearführung 3 eine sehr hohe Positioniergenauigkeit und Lagestabilität garantiert. Der Radialantrieb 8 ist vorteilhafterweise mit einem sogenannten Torque-Motor ausgeführt. Torque-Motoren haben die Eigenschaft, dass sehr grosse Drehmomente aufgebracht werden können. Sie eignen sich deshalb besonders gut für Anwendungen in denen ungleichförmig verteilte Massen (hier der Pendelarm 6) schnell und präzis bewegt oder geschwenkt werden müssen.

Der Übertragungskopf 7 ist für die Belichtung der Druckvorlagen vorgesehen und ist am Ende des Pendelarmes 6 angebracht. Der Aufnehmer 4 und der Übertragungskopf 7 sind in Richtung der Zylinderachse Z mittels des Axialantriebs relativ zueinander bewegbar. Der Aufnehmer 4 und der Übertragungskopf 7 sind (in einer Abwicklung betrachtet) mittels des Radialantriebs 8 und des Pendelarms 6 in einer Richtung rechtwinklig zur Zylinderachse Z ebenfalls relativ zueinander bewegbar. Somit erlaubt die gezeigte Anordnung die Ansteuerung des Übertragungskopfes 7 zu jedem gewünschten Punkt auf der zylinderartig gekrümmten Innenfläche eines auf dem Aufnehmer aufgelegten und zu belichtenden Datenträgers.

Der Innentrommelbelichter 1 ist zudem mit einem Array (nicht dargestellt) mit einer Vielzahl von Lichtquellen zur Belichtung der Druckvorlagen ausgestattet. Von diesem Array werden die Lichtstrahlen von der Vielzahl der Lichtquellen zu einer am Übertragungskopf 7 angebrachten Belichtungsoptik 9 geführt. Währen der Belichtung bzw. Bebilderung eines Datenträgers wird der Übertragungskopf 7 bzw. die Belichtungsoptik in kurzem Abstand über dem Datenträger vorbeigeführt, vorzugsweise in einer Weise, dass die Distanz (d) zwischen zumindest einer Oberfläche des Übertragungskopfes und dem Datenträger während dem Belichten einer Druckvorlage weniger als 1 cm beträgt.

Das Array mit der Vielzahl von Lichtquellen, vorzugsweise Laserdioden, kann an verschiedenen Orten des Innentrommelbelichters 1 angebracht sein, vorzugsweise jedoch ortsfest am Maschinengestell 2, beispielsweise in der Umgebung des Radialantriebs 8. Die Lichtstrahlen der einzelnen Laserdioden werden vorzugsweise über lichtleitende Fasern, z.B. Glasfasern, durch eine Hohlwelle der Zylinderachse Z zu einer Steckerbox 10 am Pendelarm 6 geführt. Nach der Steckerbox 10 werden die Lichtsignale der einzelnen Laserdioden (wiederum mit lichtleitenden Fasern) in einer Rasterplatte (nicht dargestellt) in einer Rasteranordnung zusammengefasst und als paralleles Lichtstrahlenbündel als Input dem Übertragungskopf 7 mit der Belichtungsoptik 9 zugeführt. Die Belichtungsoptik 9 ist an die Wellenlänge der verwendeten Lichtquellen angepasst, um eine möglichst hohe Abbildungsleistung zu erzielen, und sie ist vorteilhafterweise auch mit einer Autofokussiereinrichtung versehen, damit allfällige Unebenheiten des zu belichtenden Datenträgers sofort ausgeglichen werden können.

Die Steckerbox 10 beinhaltet Glasfasersteckeinrichtungen. Es erweist sich in viele Fällen als vorteilhaft, die Verbindung über lichtleitende Fasern zwischen den Lichtquellen (Laserdioden) und dem Übertragungskopf 7 beidseitig (d.h. Steckerboxseitig und Laserdiodenseitig) in steckbarer Form zu gestalten, was den Ersatz bei Unterhaltsarbeiten erheblich erleichtert. Dies ist vorteilhaft, weil zumindest ein Teilbereich der lichtleitenden Fasern infolge der Pendelbewegungen des Pendelarmes ständigen Torsionsbelastungen unterworfen ist, was zu Glasfaserbrüchen führen könnte. Die Zylinderachse kann zudem zumindest teilweise als Hohlwelle ausgebildet sein und die lichtleitenden Fasern können durch diese Hohlwelle zum Übertragungskopf 7 geführt werden. Dadurch kann die Torsionsbelastung der lichtleitenden Fasern durch Verkleinerung der erforderlichen Bewegung der lichtleitenden Fasern verringert werden.

Vorstehend wurde erwähnt, dass das Array mit den Laserdioden, an verschiedenen Orten des Innentrommelbelichters 1 angebracht sein kann. Grundsätzlich kann das Array mit den Laserdioden in Modulen in einem Interfaceteil in einer Weise am Innentrommelbelichter angeordnet sein, dass es die Bewegungen des Übertragungskopfes nicht oder nur in der zur Belichtung der Datenträger erforderlichen Bewegung in axialer Richtung der Zylinderachse mitmacht, um die für einen Belichtungsvorgang zu bewegende Masse des Pendelarms möglichst klein zu halten. Wird das Array, wie oben erwähnt gemäss der Ausführung nach Figur 1, ortsfest am Maschinengestell 2 angebracht, macht es die Bewegungen des Übertragungskopfes 7 nicht mit. Da der Innentrommelbelichter 1 aber auch in einer Weise ausgeführt sein könnte, dass der Aufnehmer 4 ortsfest ist und der Pendelarm 6 mit dem Übertragungskopfes 7 linear in Richtung der Zylinderachse bewegbar ist, würde das Array nur die Bewegungen des Übertragungskopfes in der zur Belichtung der Datenträger erforderlichen Bewegung in axialer Richtung mitmachen.

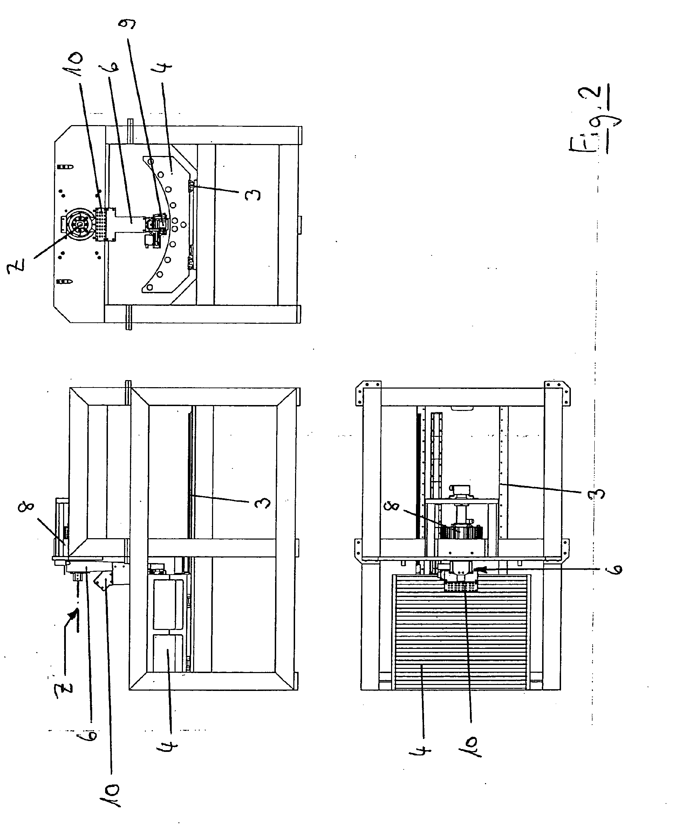

Die Figur 2 zeigt zur Verdeutlichung den Innentrommelbelichter gemäss Fig. 1 noch in einem Grundriss, Aufriss und Seitenriss.

Die Steuerung der Belichtung eines Datenträgers für einen erfindungsgemässen Innentrommelbelichter 1 kann schliesslich in den folgenden grundsätzlichen Verfahrensschritten erfolgen:
- in einem ersten Verfahrensschritt wird ein Datenträger im Aufnehmer 4 angeordnet und positioniert,
- in einem zweiten Verfahrensschritt wird eine erste Zeile von Dateninformationen mittels des Übertragungskopfes 7 während einer ersten Pendelbewegung des Pendelarmes 6 mittels des Radialantriebs 8 in einer ersten Richtung auf den Datenträger belichtet,
- in einem dritten Verfahrensschritt wird der Aufnehmer 4 und der Übertragungskopf 7 in Richtung der Zylinderachse Z mittels des Axialantriebs relativ zueinander um einen Betrag versetzt,
- in einem vierten Verfahrensschritt wird eine zweite Zeile von Dateninformationen mittels des Übertragungskopfes 7 während einer zweiten Pendelbewegung des Pendelarmes 6 mittels des Radialantriebs 8 in einer zweiten Richtung auf den Datenträger belichtet,
- in einem fünften Verfahrensschritt wird der Aufnehmer 4 und der Übertragungskopf 7 in Richtung der Zylinderachse Z mittels des Axialantriebs wiederum relativ zueinander um einen weiteren Betrag versetzt, und
- in weiteren Verfahrensschritten, die sinngemäss dem zweiten bis fünften Verfahrensschritten entsprechen, wird der zu belichtende Teil des Datenträgers vollständig belichtet.

Abwandlungen und Verfeinerungen dieses Verfahrens sind natürlich möglich.

Die Steuerung der Pendelbewegung des Pendelarmes erfolgt vorteilhafterweise mit konstanter Winkelgeschwindigkeit, so dass ein Datenstrom mit zu belichtenden Daten in konstanten Zeitintervallen, d.h. mit einer fixen Datenrate, von einer Maschinensteuerung (nicht dargestellt) zu dem Übertragungskopf übertragen werden kann. Dies erlaubt die Erzeugung eines gleichmässig feinen Belichtungsmusters in allen Bereichen des zu belichtenden Datenträgers. Eine zwingende Notwendigkeit zu konstanter Winkelgeschwindigkeit besteht aber nicht. So könnte die Steuerung des Pendelarmes durchaus auch mit nicht-konstanter Winkelgeschwindigkeit erfolgen, und ein Datenstrom mit zu belichtenden Daten könnte in Abhängigkeit von der momentanen Winkelgeschwindigkeit des Pendelarmes 6 auch in nicht-konstanten Zeitintervallen, d.h. mit variablen Taktraten, von der Maschinensteuerung zu dem Übertragungskopf 7 übertragen werden. Dies könnte zum Beispiel vorgesehen sein, wenn grössere Bereiche des zu belichtenden Datenträgers gar keine Belichtung erfordern.

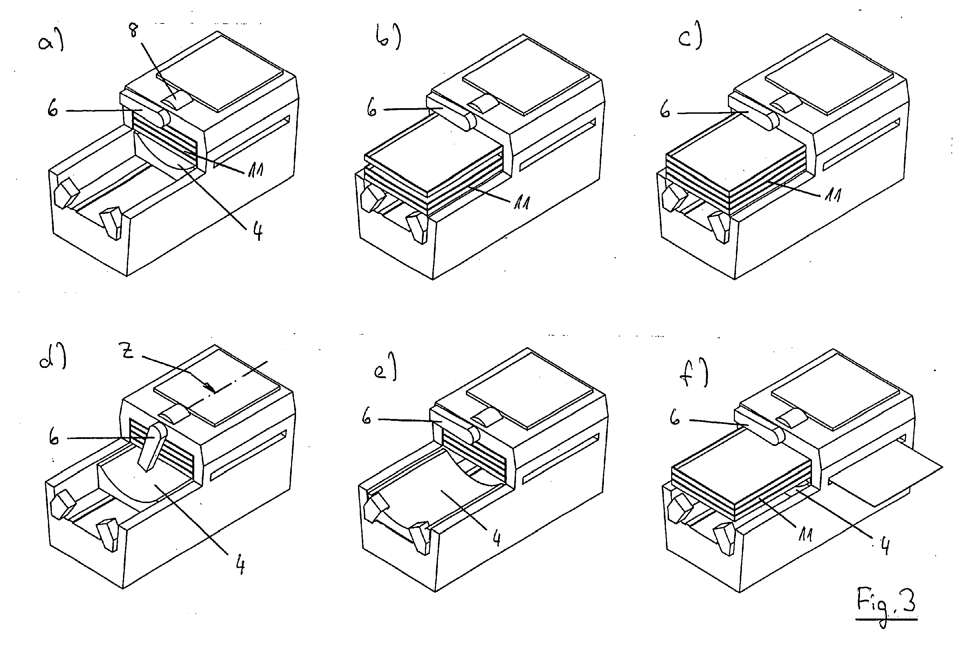

Die Figur 3 zeigt schliesslich noch in schematischer und beispielhafter Weise einen möglichen Bearbeitungsvorgang mit einem Innentrommelbelichter gemäss Fig. 1. Hier wird davon ausgegangen, dass ein erfindungsgemässer Innentrommelbelichter 1 zusätzlich noch mit einer in Richtung der Zylinderachse Z axial bewegbaren Datenträger-Bestückungseinrichtung 11 ausgestattet sein kann, die im wesentlichen unterhalb der Zylinderachse angeordnet ist. Wird nämlich der Pendelarm 6 in eine horizontale Stellung geschwenkt, so bietet das erfindungsgemässe Maschinenkonzept genügend Platz für die Anordnung und die axiale Bewegbarkeit der Datenträger-Bestückungseinrichtung 11 in diesem Bereich. Zudem kann auch noch eine (nicht dargestellte) Stanzeinrichtung vorhanden sein.

Die Figur 3 zeigt in sechs Phasen a) bis f) einen möglichen Bearbeitungsvorgang mit einem derartigen Innentrommelbelichter.
a) Der erfindungsgemässe Innentrommelbelichter 1 befindet sich in einer Ausgangslage. Der Pendelarm 6 ist in eine horizontale Stellung geschwenkt und sowohl der Aufnehmer 4 wie auch die Datenträger-Bestückungseinrichtung 11 sind zum Schutz im Maschinengehäuse eingefahren.
b) Der erfindungsgemässe Innentrommelbelichter 1 befindet sich in einer Stellung, in der ein Datenträger aufgenommen wird. Der Pendelarm 6 ist in eine horizontale Stellung geschwenkt, während die Datenträger-Bestückungseinrichtung 11 ausgefahren ist. Dies erlaubt die Aufnahme von Datenträgern auf der Datenträger-Bestückungseinrichtung 11.
c) Der erfindungsgemässe Innentrommelbelichter 1 befindet sich in einer Stellung, in der ein Datenträger im Aufnehmer abgelegt wird. Der Pendelarm 6 ist in eine horizontale Stellung geschwenkt, während die Datenträger-Bestückungseinrichtung 11 noch immer ausgefahren ist.
d) In dieser Stellung wird ein Datenträger mit dem erfindungsgemässe Innentrommelbelichter 1 belichtet. Die Datenträger-Bestückungseinrichtung 11 ist eingefahren. Der Aufnehmer 4 mit dem darauf fixierten Datenträger (nicht dargestellt) fährt in der Axialrichtung Z langsam heraus währendem die Belichtung des Datenträgers während Pendelbewegungen des Pendelarmes 6 erfolgt.
e) Der erfindungsgemässe Innentrommelbelichter 1 befindet sich in einer Stellung, in der der fertig belichtete Datenträger gestanzt wird. Der Pendelarm 6 ist in eine horizontale Stellung geschwenkt, während die Datenträger-Bestückungseinrichtung 11 wieder eingefahren ist.
f) Der erfindungsgemässe Innentrommelbelichter 1 befindet sich in einer Stellung, in der der fertig belichtete und gestanzter Datenträger entladen (ausgegeben) wird. Der Pendelarm 6 ist in eine horizontale Stellung geschwenkt, während die Datenträger-Bestückungseinrichtung 11 noch immer ausgefahren, der Aufnehmer 4 mit dem fertig belichteten und gestanzten Datenträger aber eingefahren ist, so dass der Datenträger von einem Entlademechanismus erfasst und ausgegeben werden kann.

## Patentansprüche

1. Innentrommelbelichter (1) zum Belichten von Druckvorlagen in der Form von flächigen biegsamen Datenträgern, mit einem zumindest teilweise als Innenzylinder (5) geformten Aufnehmer (4) zum Anordnen der Datenträger und einem um die Zylinderachse Z des Innenzylinders (5) rotierbaren Übertragungskopf (7) für die Belichtung der Druckvorlagen, wobei der Aufnehmer (4) und der Übertragungskopf (7) in Richtung der Zylinderachse Z mittels eines Axialantriebs relativ zueinander bewegbar sind, und wobei ein Array mit einer Vielzahl von Lichtquellen zur Belichtung der Druckvorlagen vorhanden ist und die Distanz (d) zwischen zumindest einer Oberfläche des Übertragungskopfes (7) und dem Datenträger während dem Belichten einer Druckvorlage weniger als 1 cm beträgt, **dadurch gekennzeichnet, dass** der Übertragungskopf (7) an einem um die Zylinderachse Z des Innenzylinders (5) rotierbaren Pendelarm (6) befestigt ist und ein Radialantrieb (8) zur Erzeugung von Pendelbewegungen für den Pendelarm (6) vorhanden ist, wobei die Zylinderachse Z als Pendelachse wirkt.

2. Innentrommelbelichter (1) nach Patentanspruch 1, **dadurch gekennzeichnet, dass** mit dem Axialantrieb der Aufnehmer (4) in Richtung der Zylinderachse Z in einer Linearführung (3) axial bewegbar ist.

3. Innentrommelbelichter (1) nach Patentanspruch 1 oder 2, **dadurch gekennzeichnet, dass** der Radialantrieb (8) zur Erzeugung von Pendelbewegungen des Pendelarms mit im wesentlichen konstanter Winkelgeschwindigkeit in dem teilweise als Innenzylinder (5) geformten Aufnehmer (4) ausgebildet ist.

4. Innentrommelbelichter (1) nach einem der Patentansprüche 1 bis 3, **dadurch gekennzeichnet, dass** der Pendelarm (6) in eine horizontale Stellung schwenkbar ist.

5. Innentrommelbelichter (1) nach einem der Patentansprüche 1 bis 4, **dadurch gekennzeichnet, dass** der Pendelarm (6) mit einer oder mehreren Belichtungsoptik(en) (9) bestückbar ist.

6. Innentrommelbelichter (1) nach einem der Patentansprüche 1 bis 5, **dadurch gekennzeichnet, dass** der Aufnehmer (4) manuell mit Datenträgern beladbar ist oder dass eine in Richtung der Zylinderachse Z axial bewegbare Datenträger-Bestückungseinrichtung (11) vorhanden ist, die im wesentlichen unterhalb der Zylinderachse Z angeordnet ist.

7. Innentrommelbelichter (1) nach einem der Patentansprüche 1 bis 6, **dadurch gekennzeichnet, dass** Datenträger verschiedener Grösse im Aufnehmer (4) positionier- und fixierbar sind.

8. Innentrommelbelichter (1) nach einem der Patentansprüche 1 bis 7, **dadurch gekennzeichnet, dass** eine Stanzeinrichtung vorhanden ist.

9. Innentrommelbelichter (1) nach einem der Patentansprüche 1 bis 8, **dadurch gekennzeichnet, dass** eine Absaugeinrichtung für ablative Masken vorhanden ist.

10. Innentrommelbelichter (1) nach einem der Patentansprüche 1 bis 9, **dadurch gekennzeichnet, dass** das Array mit den Lichtquellen als Ganzes oder in Teilen auswechselbar ist.

11. Innentrommelbelichter (1) nach einem der Patentansprüche 1 bis 10, **dadurch gekennzeichnet, dass** das Array mit den Lichtquellen in Modulen in einem Interfaceteil in einer Weise am Innentrommelbelichter (1) angeordnet ist, dass es die Bewegungen des Übertragungskopfes nicht oder nur in der zur Belichtung der Datenträger erforderlichen Bewegung in axialer Richtung der Zylinderachse Z mitmacht, um die für einen Belichtungsvorgang zu bewegende Masse des Pendelarms (6) möglichst klein zu halten.

12. Innentrommelbelichter (1) nach einem der Patentansprüche 1 bis 11, **dadurch gekennzeichnet, dass** die Zylinderachse Z bzw. Pendelachse zumindest teilweise als Hohlwelle ausgebildet ist und die Lichtsignale von den Lichtquellen über lichtleitende Fasern durch die Hohlwelle zum Übertragungskopf (7) geleitet werden.

13. Innentrommelbelichter (1) nach Patentanspruch 12, **dadurch gekennzeichnet, dass** am Pendelarm (6) eine Steckerbox (10) für die lichtleitenden Fasern vorhanden ist.

14. Innentrommelbelichter (1) nach einem der Patentansprüche 1 bis 13, **dadurch gekennzeichnet, dass** die Lichtquellen im Infrarotbereich oder im sichtbaren Bereich leuchtende Laserdioden sind.

15. Innentrommelbelichter (1) nach einem der Patentansprüche 1 bis 14, **dadurch gekennzeichnet, dass** der Datenträger mittels einer Unterdrucktechnik und/oder mittels mechanischer Positioniermittel im Aufnehmer fixierbar ist.

16. Innentrommelbelichter (1) nach einem der Patentansprüche 1 bis 15, **dadurch gekennzeichnet, dass** für den Radialantrieb (8) ein sogenannter Torque-Motor eingesetzt wird.

17. Innentrommelbelichter (1) nach einem der Patentansprüche 1 bis 16, **dadurch gekennzeichnet, dass** der Übertragungskopf (7) eine Belichtungsoptik (9) mit einer Autofokussiereinrichtung sowie eine Rasterplatte zur Bereitstellung der Lichtsignale von den Lichtquellen in einer Rasteranordnung von parallelen Lichtstrahlen enthält.

18. Verfahren zur Steuerung der Belichtung eines Datenträgers für einen Innentrommelbelichter (1) nach Patentanspruch 1, wobei:
- in einem ersten Verfahrensschritt ein Datenträger im Aufnehmer (4) angeordnet und positioniert wird,
- in einem zweiten Verfahrensschritt eine erste Zeile von Dateninformationen mittels des Übertragungskopfes (7) während einer ersten Pendelbewegung des Pendelarmes (6) mittels des Radialantriebs (8) in einer ersten Richtung auf den Datenträger belichtet wird,
- in einem dritten Verfahrensschritt der Aufnehmer (4) und der Übertragungskopf (7) in Richtung der Zylinderachse Z mittels des Axialantriebs relativ zueinander um einen Betrag versetzt werden,
- in einem vierten Verfahrensschritt eine zweite Zeile von Dateninformationen mittels des Übertragungskopfes (7) während einer zweiten Pendelbewegung des Pendelarmes (6) mittels des Radialantriebs (8) in einer zweiten Richtung auf den Datenträger belichtet wird,
- in einem fünften Verfahrensschritt der Aufnehmer (4) und der Übertragungskopf (7) in Richtung der Zylinderachse Z mittels des Axialantriebs relativ zueinander um einen weiteren Betrag versetzt werden,
- in weiteren Verfahrensschritten, die sinngemäss dem zweiten bis fünften Verfahrensschritten entsprechen, der zu belichtende Teil des Datenträgers vollständig belichtet wird.

19. Verfahren nach Patentanspruch 18, **dadurch gekennzeichnet, dass** die Pendelbewegung des Pendelarmes (6) mit konstanter Winkelgeschwindigkeit erfolgt und ein Datenstrom mit zu belichtenden Daten in konstanten Zeitintervallen von einer Maschinensteuerung zu dem Übertragungskopf (7) übertragen wird.

20. Verfahren nach Patentanspruch 18, **dadurch gekennzeichnet, dass** die Pendelbewegung des Pendelarmes (6) mit nicht-konstanter Winkelgeschwindigkeit erfolgt und ein Datenstrom mit zu belichtenden Daten in nicht-konstanten Zeitintervallen von einer Maschinensteuerung zu dem Übertragungskopf (7) übertragen wird.
